# EUROPEAN PATENT APPLICATION

(11) **EP 4 417 385 A1**
(43) Date of publication of application: **21.08.2024**
(21) Application number: 24157548.9
(22) Date of filing: 14.02.2024
(51) Int. Cl.: B28D 5/00, B23D 57/00

(54) **BRICK LOADING/UNLOADING APPARATUS AND METHOD**

(30) Priority: 14.02.2023 KR 20230019537
(71) Applicant: Hanwha Corporation, Seoul 04541 (KR)
(72) Inventor: Lee, Jong Won, Seoul (KR); Jung, Hyun Seok, Seoul (KR); Kim, Seung Jin, Seoul (KR); Lee, Sang Ryeol, Seoul (KR)
(74) Representative: Gulde & Partner

(57) **Abstract**

A brick loading/unloading apparatus (100) includes: a main body (110); a transport module (130) transporting a brick (B) to a brick cutting apparatus (200) in which a brick insertion space S is formed; a lift arm (120) coupled to an upper end portion of the main body (110) to move up/down the transport module (130); and a plurality of wires (140) connecting the transport module (130) to the lift arm (120), wherein the transport module (130) includes an alignment guide rest portion (131) connected to the wires (140), the brick cutting apparatus (200) includes an alignment guide (210) that corresponds to the alignment guide rest portion (131) in an up-and-down direction and is arranged on an outer side thereof, and when the lift arm (120) descends the transport module (130) by extending the wires (140), the transport module (130) is aligned and seated on the alignment guide (210).

## Description

### BACKGROUND

### 1. Field

One or more embodiments include a brick loading/unloading apparatus and method capable of loading/unloading a silicon brick on/from a brick cutting apparatus during a process of manufacturing a wafer of a solar battery.

### 2. Description of the Related Art

Processes of manufacturing a wafer of a solar battery inevitably include a cutting process, in which a silicon brick is cut into thin wafers. Recently, a method of producing cut wafers by using a diamond wire saw (DWS) has been utilized as a method of cutting a silicon brick.

In order to produce cut thin wafers, a process of inserting a silicon brick of a brick shape into a brick cutting apparatus is necessary.

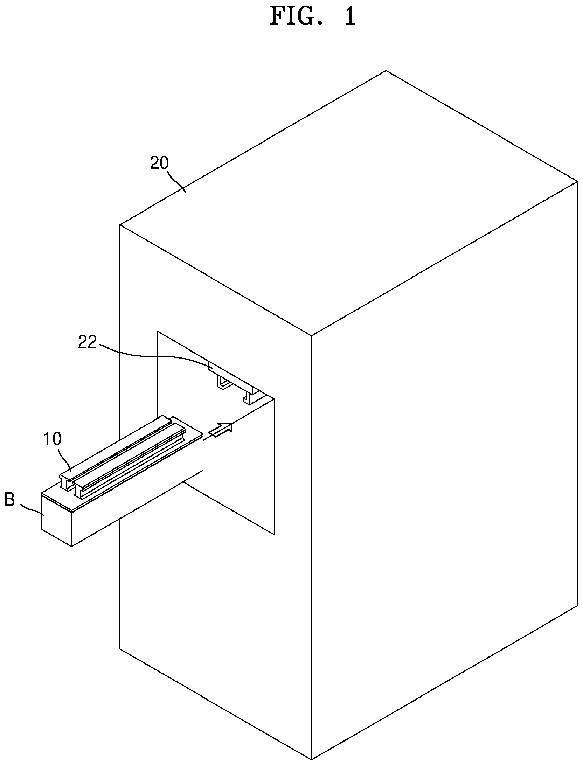

FIG. 1 shows a general process of inserting a silicon brick B into a brick cutting apparatus 20.

In general, in a process of inserting the silicon brick B into the brick cutting apparatus 20, a bar 10 formed at the upper end of the silicon brick B is inserted and pushed into a brick insert groove 22 of the brick cutting apparatus 20.

Here, a high-degree of precision is necessary because the brick B having a length of 900 mm or greater has to be inserted into the insert groove 22 of the brick cutting apparatus 20 having a tolerance of ±2 mm. When performed manually, it is difficult for an operator to adjust fine warpage with the sense of his/her hands while pushing the brick into the groove of the brick cutting apparatus 20.

Also, in the case of using a general brick transport member, when the brick is fitted into the brick insert groove 22, in order to insert the brick into the brick cutting apparatus 20, only a restricted position adjustment of the brick in the up/down/left/right directions is possible, and thus, it is difficult to precisely insert the brick B into the insert groove 22.

### SUMMARY

One or more embodiments include a brick loading/unloading apparatus and method capable of precisely inserting a brick into a brick cutting apparatus.
However, the above technical features are exemplary, and the scope of the disclosure is not limited thereto.

Additional aspects will be set forth in part in the description which follows and, in part, will be apparent from the description, or may be learned by practice of the presented embodiments of the disclosure.

According to an embodiment, a brick loading/unloading apparatus includes a main body, a transport module transporting a brick to a brick cutting apparatus in which a brick insertion space is formed, a lift arm coupled to an upper end portion of the main body to move the transport module up/down (i.e. vertically), and a plurality of wires connecting the transport module to the lift arm, wherein the transport module includes an alignment guide rest portion connected to the wires, the brick cutting apparatus includes an alignment guide that corresponds to the alignment guide rest portion in an up-and-down direction and is arranged on an outer side thereof, and when the lift arm descends the transport module by extending the wires, the transport module is aligned and seated on the alignment guide.

Thereby, the brick is aligned efficiently and reliably for being inserted into the brick cutting apparatus. Optionally, a plurality of chains may be used instead of or additionally to wires.

The brick loading/unloading apparatus may further include a body portion coupled to an upper end portion of the insertion space in the brick cutting apparatus, and first and second guide portions that respectively extend from opposite sides of the body portion toward the outer portion of the brick cutting apparatus. The alignment guide rest portion may be formed in a plate shape and may be seated and aligned on upper portions of the first and second guide portions.

The body portion and the alignment guide rest portion allow a positioning and/or first coupling of the brick with the brick cutting apparatus.

An alignment groove may be recessed in an upper surface of each of the first and second guide portions, and the alignment groove may have an inclined surface.

The alignment groove allows an error during the first positioning of the alignment guide rest portion onto the alignment guide. The inclined surface supports guiding the alignment guide to its ideal position in the middle of the alignment groove.

A ball caster may be arranged on a lower surface of the alignment guide rest portion, and the ball caster may be arranged on a region corresponding to the alignment groove. When the transport module is descended, the ball caster may be moved to a center of the alignment groove along the inclined surface and the transport module is aligned with 6-degree of freedom.

A movable ball caster may have a very low friction, that is rolling friction, compared to other solutions like a pin or a fixed ball caster which would move under gliding friction. By reducing the friction, it is more likely that the alignment guide rest portion is aligned with the alignment guide. The 6-degree of freedom may be forward/backward (x-direction), left/right (y-direction), up/down (z-direction), and rotation along said three axis (Rx, Ry, Rz), respectively, as seen from the longitudinal axis of the brick facing the insertion space of the brick cutting apparatus.

The transport module may include a brick transport portion arranged at a lower portion thereof, and the brick transport portion may be moved while gripping an upper end portion of the brick to insert the brick into the brick cutting apparatus.

The brick transport portion allows movement of the brick through the insertion space into the brick cutting apparatus.

A brick insert portion receiving the brick transported by the brick loading/unloading apparatus may be formed in the insert space of the brick cutting apparatus. When the alignment of the transport module on the alignment guide is completed, the brick insert portion may be arranged in a region corresponding to the brick transport portion.

In other words, the brick insertion portion is longitudinally aligned with the movement direction of the brick transport portion.

The brick loading/unloading apparatus may further include a pressing member provided to allow the transport module to protrude upward from a lower side of the lift arm, and the pressing member may press an upper surface of the alignment guide rest portion so that the transport module comes into close contact with the first and second guide portions of the alignment guide.

By the pressure of the pressing member on the alignment guide rest portion, the alignment guide rest portion is forced onto the guide portions, thereby forcing the alignment guide rest portion to align with the guide portions.

The brick loading/unloading apparatus may further include a transport member arranged on the lower side of the main body and controlling the position of the brick loading/unloading apparatus.

The transport member may be an electronic transport member, like an automated guided vehicle, a robot, a remotely controlled electric vehicle. Alternatively, the transport member may be a manually operated transport member like a caster.

According to an embodiment, a brick loading/unloading method includes the steps of moving a transport module that transports a brick, to a first position corresponding to a brick cutting apparatus, in which a brick insert space is formed, moving the transport module to a second position that is higher than an alignment guide that is arranged on an outer side of the brick cutting apparatus, moving the transport module to a third position that corresponds to an upper portion of the alignment guide in an up-and-down direction, descending the transport module onto the alignment guide and moving the transport module to a fourth position aligned on the alignment guide, and while the transport module is arranged at the fourth position, loading/unloading the brick, by a brick transport portion corresponding to a lower side of the transport module, to/from the brick insert space.

Thereby, the brick is aligned efficiently and reliably for being inserted into the brick cutting apparatus. In other words, the brick transport portion may be positioned at a lower side of the transport module.

The alignment guide may include first and second guide portions respectively extending to an outer portion of the brick cutting apparatus, an alignment groove may be recessed in an upper surface of each of the first and second guide portions, and the moving of the transport module to the fourth position may include moving a ball caster arranged on the transport module to a center of the alignment groove so that the transport module is aligned with 6-degree of freedom.

A ball caster allows, due to its low friction, precise positioning as it will be directed to the center of the alignment groove. By this movement from the original unaligned position to the final position, that is the aligned position, said movement in 6-degree of freedom is possible.

The moving of the transport module to the fourth position may further include pressing, by a pressing member, an upper portion of the transport module.

By the pressure on the upper portion of the transport module, the transport module is forced onto the guide portions, thereby forcing the alignment of the transport module with the guide portions.

According to an embodiment, a system includes a brick loading/unloading apparatus as described above and a brick cutting apparatus including an alignment guide corresponding to the alignment guide rest portion of the brick loading/unloading apparatus.

Other aspects, features and advantages of the disclosure will become better understood through the accompanying drawings, the claims and the detailed description.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a diagram illustrating a process of inserting a silicon brick into a brick cutting apparatus according to the related art;
FIG. 2 is a perspective view of a transport member, a brick loading/unloading apparatus, and a brick cutting apparatus according to an embodiment of the present disclosure;
FIG. 3 is an exploded perspective view of a brick loading/unloading apparatus according to an embodiment of the present disclosure;
FIG. 4 is a diagram showing that a transport member transports a transport module of a brick loading/unloading apparatus to a first position corresponding to a brick cutting apparatus, according to an embodiment of the present disclosure;
FIG. 5 is a diagram showing that a lift arm transports a transport module to a second position that is higher than an alignment guide, according to an embodiment of the present disclosure;
FIG. 6 is a diagram showing that a transport member transports a transport module of a brick loading/unloading apparatus from an upper portion of an alignment guide to a third position corresponding to the alignment guide, according to an embodiment of the present disclosure;
FIG. 7 is a diagram showing that a lift arm descends a transport module and the transport module is seated and aligned on an alignment guide, according to an embodiment of the present disclosure;
FIG. 8 is a diagram showing that a transport module is seated and aligned on the alignment guide of FIG. 7;

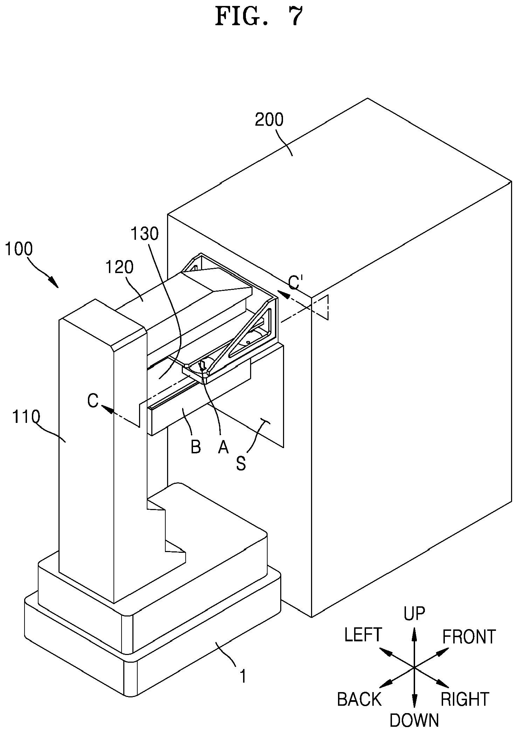

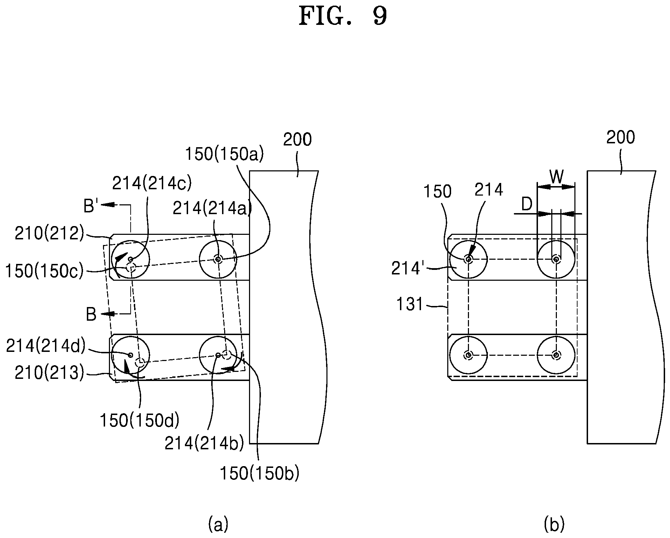

FIG. 9A and 9B are diagrams seen from direction A of FIG. 7, and showing that an alignment guide rest portion of a transport module is aligned when the transport module is aligned; FIG. 9A is a diagram seen from the upper portion of an alignment guide when a transport module is descended based on an alignment guide; FIG. 9B is a diagram showing a state in which an alignment guide rest portion is aligned and seated based on an alignment guide, while a ball caster connected to the alignment guide rest portion of a transport module is inserted in an alignment groove of the alignment guide and moves to the center of the alignment groove;

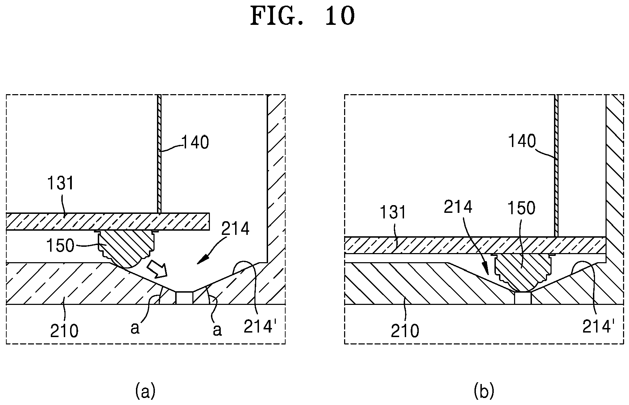

FIGS. 10A and 10B are cross-sectional views taken along line B-B' of FIG. 9A, and show that an alignment guide rest portion of a transport module is aligned when the transport module is aligned; FIG. 10A is a diagram seen from the side portion of an alignment guide when a transport module is descended based on an alignment guide; FIG. 10B is a diagram showing a state in which an alignment guide rest portion is aligned and seated based on an alignment guide, while a ball caster connected to the alignment guide rest portion of a transport module is inserted in an alignment groove of the alignment guide and moves to the center of the alignment groove;
FIG. 11 is a cross-sectional view taken along line C-C' of FIG. 7, and shows a state in which a transport module is seated on an alignment guide;
FIG. 12 is a diagram showing that a brick is inserted in an insertion space of a brick cutting apparatus after finishing the seating of a transport module, according to an embodiment of the present disclosure; and
FIG. 13 is a flowchart illustrating a brick loading/unloading method according to an embodiment of the present disclosure.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

As the present disclosure allows for various changes and numerous embodiments, particular embodiments will be illustrated in the drawings and described in detail in the written description. However, this is not intended to limit the present disclosure to particular modes of practice, and it is to be appreciated that all modifications, equivalents, and/or alternatives that do not depart from the spirit and technical scope are encompassed in the disclosure. In describing the present disclosure, like reference numerals denote the same elements even when the elements are provided in another embodiment.

The embodiments will be described below in more detail with reference to the accompanying drawings. Those components that are the same or are in correspondence are rendered the same reference numeral regardless of the figure number, and redundant explanations are omitted.

While such terms as "first," "second," etc., may be used to describe various components, such components are not limited to the above terms. The above terms are used only to distinguish one component from another.

An expression used in the singular encompasses the expression of the plural, unless it has a clearly different meaning in the context.

In the present specification, it is to be understood that the terms "including," "having," and "comprising" are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

Sizes of components in the drawings may be exaggerated for convenience of explanation. In other words, since sizes and thicknesses of components in the drawings are arbitrarily illustrated for convenience of explanation, the following embodiments are not limited thereto.

When a certain embodiment is implemented differently, a specific process order may be performed differently from the described order. For example, two consecutively described processes may be performed substantially at the same time or performed in an order opposite to the described order.

The terms used in the present specification are merely used to describe particular embodiments, and are not intended to limit the present disclosure. In the present specification, it is to be understood that the terms such as "including," "having," and "comprising" are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

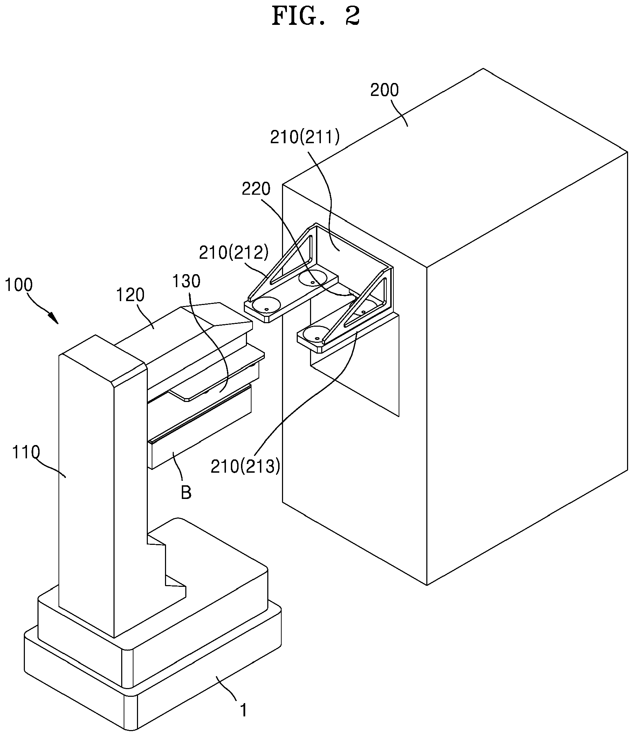

Hereinafter, a brick loading/unloading apparatus according to an embodiment of the present disclosure is described below with reference to FIGS. 2, 3, and 7 to 11.

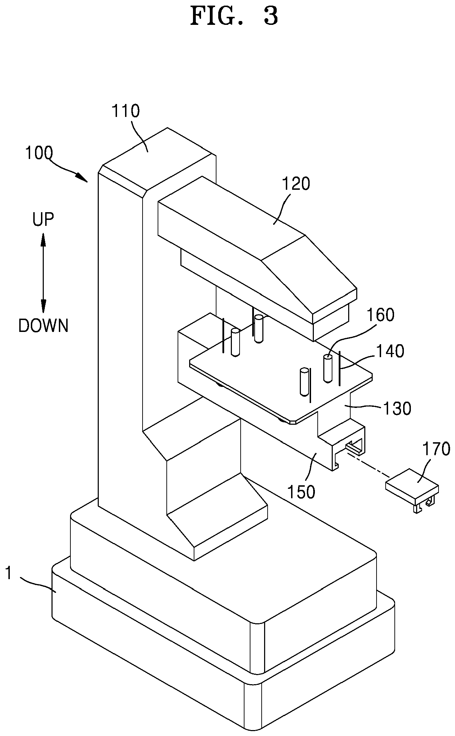

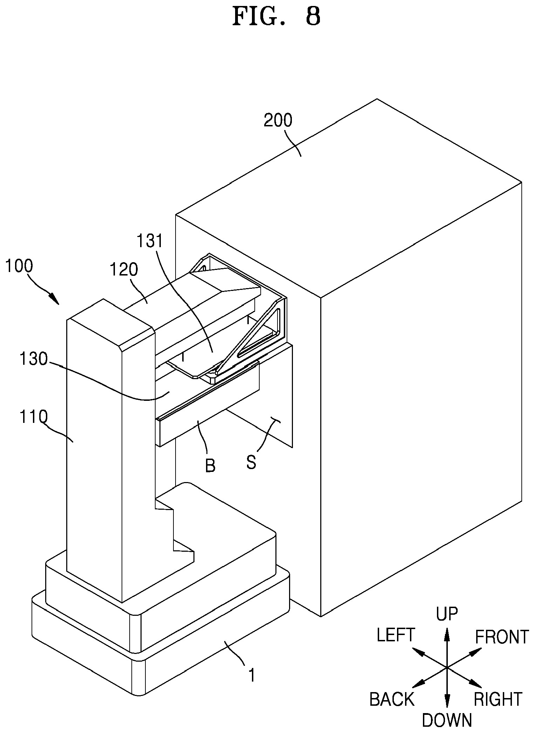

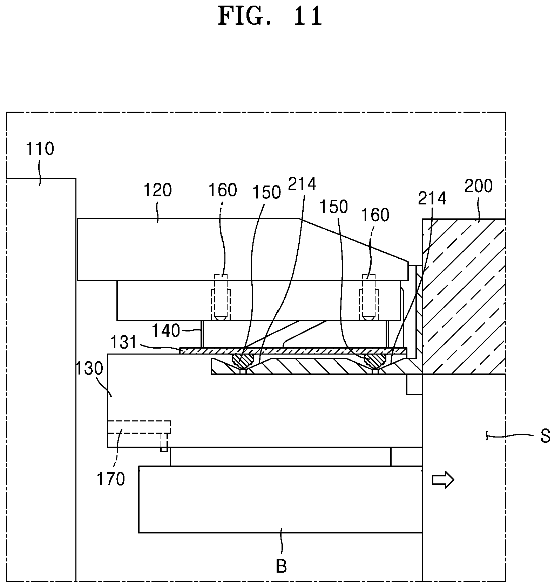

FIG. 2 is a perspective view of a transport member, a brick loading/unloading apparatus, and a brick cutting apparatus according to an embodiment of the present disclosure. FIG. 3 is an exploded perspective view of a brick loading/unloading apparatus according to an embodiment of the present disclosure. FIG. 7 is a diagram showing that a lift arm descends a transport module and the transport module is seated and aligned on an alignment guide, according to an embodiment of the present disclosure. FIG. 8 is a diagram showing that a transport module is seated and aligned on the alignment guide of FIG. 7. FIGS. 9A and 9B are diagrams seen from direction A of FIG. 7, and showing that an alignment guide rest portion of a transport module is aligned when the transport module is aligned. FIG. 9A is a diagram seen from the upper portion of an alignment guide when a transport module is descended based on an alignment guide. FIG. 9B is a diagram showing a state in which an alignment guide rest portion is aligned and seated based on an alignment guide, while a ball caster connected to the alignment guide rest portion of a transport module is inserted in an alignment groove of the alignment guide and moves to the center of the alignment groove. FIGS. 10A and 10B are cross-sectional views taken along line B-B' of FIG. 9A, and show that an alignment guide rest portion of a transport module is aligned when the transport module is aligned. FIG. 10A is a diagram seen from the side portion of an alignment guide when a transport module is descended based on an alignment guide. FIG. 10B is a diagram showing a state in which an alignment guide rest portion is aligned and seated based on an alignment guide, while a ball caster connected to the alignment guide rest portion of a transport module is inserted in an alignment groove of the alignment guide and moves to the center of the alignment groove. FIG. 11 is a cross-sectional view taken along line C-C' of FIG. 7, and shows a state in which a transport module is seated on an alignment guide.

Referring to the above drawings, in particular referring to Fig. 2, a brick loading/unloading apparatus 100 according to a non-limiting embodiment of the present disclosure includes a transport member 1 transporting the brick loading/unloading apparatus 100 to a brick cutting apparatus 200, and a transport module 130. The transport module 130 is attached to the brick loading/unloading apparatus 100 and may be seated on an alignment guide 210 attached to the brick cutting apparatus 200, and may transport a brick B into the brick cutting apparatus 200. Also, the brick loading/unloading apparatus 100 includes a lift arm 120 for moving the transport module 130 up/down. Additionally, as shown in Fig. 3, the lift arm 120 may be connected to the transport module 130 via wires 140, and when the lift arm 120 descends the transport module 130 by extending the wires 140, the transport module 130 is seated on the alignment guide 210 while being aligned with 6-degree of freedom. The 6-degree of freedom refers to the vertical direction of the main body as up/down (z-axis), the longitudinal direction of the transport module (x-axis) as forward, that is towards the brick cutting apparatus 200, and backwards, that is away from the brick cutting apparatus 200. Perpendicular to said up/down as well as perpendicular to said forward/backward directions may be referred to as movement to the left and right (y-axis). The rotation along said three axis may be referred to as Rx, Ry and Rz, respectively. Optionally, a plurality of chains may be used instead of or additionally to the wires 140.

The transport member 1 is arranged under a main body 110 and may control the position of the brick loading/unloading apparatus 100. The transport member 1 may transport the brick loading/unloading apparatus 100 to a position corresponding to the brick cutting apparatus 200. Here, the transport member 1 may include an automated guided vehicle (AGV). The transport member 1 may communicate with a main server to receive information about the brick cutting apparatus 200 to which a brick B needs to be loaded, from among a plurality of brick cutting apparatuses 200. The transport member 1 may transport the brick loading/unloading apparatus 100 on which the brick B is loaded to the position where the corresponding brick cutting apparatus 200 is located. On the contrary, from among the plurality of brick cutting apparatuses 200, the transport member 1 may receive information about the brick cutting apparatus 200, from which the brick B needs to be unloaded, and may transport the brick loading/unloading apparatus 100 on which the brick B is not loaded to the position where the corresponding brick cutting apparatus 200 is located.

According to this non-limiting embodiment, the brick loading/unloading apparatus 100 may load/unload the brick B onto/from the brick cutting apparatus 200 at the position corresponding to the brick cutting apparatus 200. The brick loading/unloading apparatus 100 includes the main body 110, the lift arm 120 that is coupled to the upper end portion of the main body 110 and protrudes toward the brick cutting apparatus 200 when the brick loading/unloading apparatus 100 is located at the position corresponding to the brick cutting apparatus 200, the transport module 130 connected to the lift arm 120 at the lower side portion of the lift arm 120, and the brick B loaded on the lower side of the transport module 130.

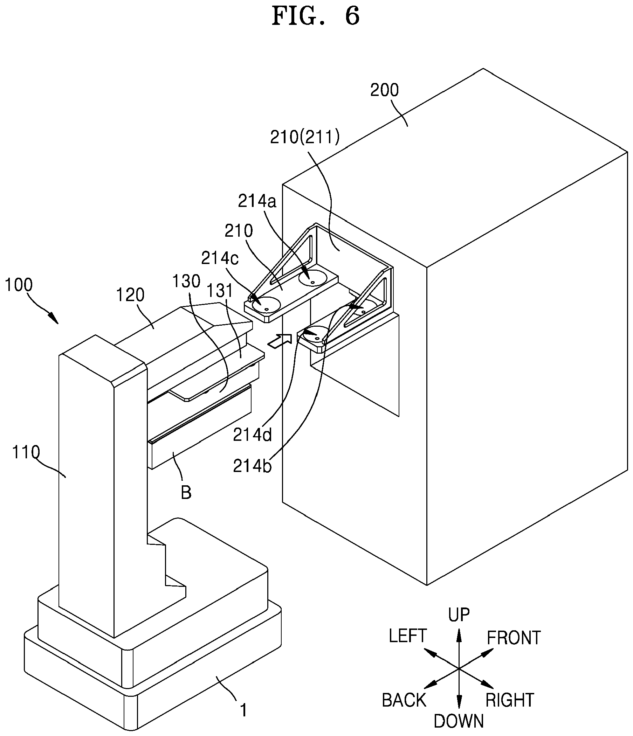

The lift arm 120 may move vertically based on the main body 110. In other words, the lift arm 120 may move vertically, i.e. up/down along the vertical extension of the main body 110. Therefore, the lift arm 120 is moved in the up and down direction based on the main body 110 to adjust the position of the transport module 130 connected to the lift arm 120, when the brick loading/unloading apparatus 100 is located at the position corresponding to the brick cutting apparatus 200. In other words, said position corresponding to the brick cutting apparatus 200 being a position for loading the brick cutting apparatus 200. According to the non-limiting embodiment as for example shown in Fig. 6, an alignment guide rest portion 131 may be arranged on the upper end portion of the transport module 130 may be, for example, formed in a plate shape having a width greater than that of the transport module 130. Alternatively, the alignment guide rest portion 131 may have another shape suitable for fitting the alignment guide 210. The alignment guide rest portion 131 has to be seated on the upper surface of the alignment guide 210. The alignment guide 210 is installed on the outer side portion of the brick cutting apparatus 200 that will be described later. The lift arm 120 may move the transport module 130 upward so that the alignment guide rest portion 131 formed on the transport module 130 may be located higher than the alignment guide 210. The transport member 1 may secondarily move the brick loading/unloading apparatus 100 to a position where the alignment guide rest portion 131 of the transport module 130 is aligned with the alignment guide 210 in the up and down directions while the transport module 130 is located higher than the alignment guide 210.

According to one non-limiting embodiment, the lift arm 120 is connected to the transport module 130 via the wires 140. The lift arm 120 may adjust the distance between the transport module 130 and the lift arm 120 by extending the wires 140. According to the non-limiting embodiment, the lift arm 120 moves the transport module 130 downward by extending the wires 140, so that the alignment guide rest portion 131 of the transport module 130 is seated on the upper surface of the alignment guide 210.

The wires 140 may be connected to the transport module 130. In more detail, the wires 140 are connected to the alignment guide rest portion 131 of the transport module 130 so as to support the alignment guide rest portion 131. For example, the wire 140 may be fixed on the upper surface of the alignment guide rest portion 131. Alternatively, the end portion of the wire 140 may be partially inserted and fixed in the alignment guide rest portion 131. Further alternatively, the wire 140 may be formed to pass through the upper and lower surfaces of the alignment guide rest portion 131 of the transport module 130 and the end portion thereof may be partially fixed on the lower surface. According to the non-limiting embodiment, the alignment guide rest portion 131 is formed in a square plate shape, and the wires 140 may be arranged on regions corresponding to four corners of the alignment guide rest portion 131. Optionally, there may be three or more wires 140.

The wire 140 may include a material that is flexibly deformable. In other words, the flexibility of the material may be such that it can be wound on a roll. In detail, when the transport module 130 connected to the wires 140 is descended, the wires 140 are bent when coming into contact with a certain component on the passage, e.g., the alignment guide 210. This may facilitate guiding the position of a ball caster 150 that is described later. Also, the wire 140 may include a material such as metal having rigidity so as to support the transport module 130 supporting the brick B. However, this embodiment is not limited to the wire 140. Any other connecting means may be used. The lift arm 120 and the transport module 130 according to the embodiment may be connected to each other via various materials having various shapes that may be bent and have a certain rigidity between the two components (120 and 130). In particular, the rigidity of the connecting means may be such that transport module 130 and the brick are supported.

According to the non-limiting embodiment as for example shown in Fig. 10, the brick loading/unloading apparatus 100 may include the ball caster 150. When the transport module 130 is descended and is aligned on first and second guide portions 212 and 213, the ball caster 150 may be guided by alignment grooves 214 formed in the first and second guide portions 212 and 213. To this end, the ball caster 150 may be arranged on the transport module 130. For example, the ball caster 150 may be arranged on the lower surface of the alignment guide rest portion 131. The ball caster 150 may be arranged on a region corresponding to the alignment groove 214. In more detail, the ball caster 150 may be coupled to the alignment guide rest portion 131 at the edge of the lower surface of the alignment guide rest portion 131. Alternatively, the ball caster may be any supporting means allowing movement on the alignment groove. In particular, the supporting means may, besides being ball-shaped, also be pin-shaped. Further alternatively, different supporting means may be used for different support locations on the alignment guide 210.

The alignment guide 210 coupled to the brick cutting apparatus 200 includes a body portion 211 that is coupled to the upper end portion of a brick insertion space S in the brick cutting apparatus 200. The first and second guide portions 212 and 213 extending from opposite side portions of the body portion 211 toward the outside of the brick cutting apparatus 200. Optionally, the first and second guide portions 212 and 213 may extend in parallel and/or aligned with each other.

In this non-limiting embodiment, the alignment grooves 214 are recessed in the upper surfaces of the first and second guide portions 212 and 213, and the ball caster 150 may be moved to the center of the alignment groove 214 due to the gravity. Therefore, the alignment guide rest portion 131 connected to the ball caster 150 may be moved and aligned along the movement direction of the ball caster 150. Therefore, along with the alignment of the alignment guide rest portion 131, the transport module 130 and the brick B loaded on the transport module 130 may be also minutely aligned so as to correspond to the position of the alignment guide 210. Due to the movement of the ball caster 150, the wires 140 may be misaligned in the up and down directions, and at this time, the wires 140 may be flexibly transformed and may maintain the transformed state in response to the alignment between the transport module 130 and the alignment guide 210.

According to this non-limiting embodiment, the alignment groove 214 may include an inclined surface 214'. The inclined surface 214' may also be referred to as a recessed surface. The ball caster 150 may be moved to the center of the alignment groove 214 along the inclined surface 214'. For example, referring to FIG. 10, an inclination angle (a) of the inclined surface 214' with respect to the lower surfaces of the first and second guide portions 212 and 213 may be about 60-degree or less. When the inclination angle (a) exceeds 60-degrees, the width on the upper surface of the alignment guide 210 of the alignment groove 214 is reduced and it may be difficult to effectively guide the position of the ball caster 150. Also, when the inclination angle (a) exceeds 60-degrees, the size and depth of the alignment groove 214 for guiding the ball caster 150 may increase, and accordingly, reliability of the first and second guide portions 212 and 213 may degrade. More preferably, the inclination angle (a) of the inclined surface 214' with respect to the lower surfaces of the first and second guide portions 212 and 213 may be 55-degree or less. Even more preferably, the inclination angle (a) of the inclined surface 214' with respect to the lower surfaces of the first and second guide portions 212 and 213 may be 45-degree or less in consideration of the effective guidance of the ball caster 150 and the reliability of the first and second guide portions 212 and 213. In one embodiment, the inclination angle of the inclined surface 214' may be selected in combination with the supporting means such that movement of the supporting means on the inclined surface 214' is possible under gravity, wherein gravity is directed perpendicular to the upper surface of the alignment guide 210.

As illustrated in Fig. 9B, the alignment groove 214 has a width w greater than a diameter D of the ball caster 150, so that the ball caster 150 may be easily inserted in the alignment groove 214. The inclined surface 214' of the alignment groove 214 may be smooth. Accordingly, the ball caster 150 may be moved to the center of the alignment groove 214 along the smooth inclined surface 214' of the alignment groove 214. According to the non-limiting embodiment, ball casters 150a, 150b, 150c, and 150d are respectively arranged on positions corresponding to four corners of the rectangular plate of the alignment guide rest portion 131, and alignment grooves 214a, 214b, 214c, and 214d may be formed at the positions respectively corresponding to the ball casters 150a, 150b, 150c, and 150d.

The first and second guide portions 212 and 213 of the alignment guide 210 may be formed to be spaced apart from each other, forming a separation space therebetween. Here, the transport module 130 may be descended and located in the separation space. The alignment guide rest portion 131 formed on the upper portion of the transport module 130 may have a width greater than that of the transport module 130, and thus, may be seated on the first and second guide portions 212 and 213 forming the separation space.

Here, as illustrated in Fig. 9A, the ball casters 150a and 150c arranged at one side of the alignment guide rest portion 131 may be inserted in the alignment grooves 214a and 214c of the first guide portion 212, and the ball casters 150b and 150d arranged at the other side of the alignment guide rest portion 131 may be inserted in the alignment grooves 214b and 214d of the second guide portion 213.

When inserting the brick B into the brick cutting apparatus 200, a precise positioning is essentially required in order to insert the brick B into the brick insert portion 220 of the brick cutting apparatus 200. Accordingly, during the process of aligning the transport module 130 on which the brick B is loaded at the position corresponding to the brick cutting apparatus 200, a precise positioning of the transport module 130 is necessary. In other words, said position corresponding to the brick cutting apparatus 200 being a position for loading the brick cutting apparatus 200.

Thus, according to the non-limiting embodiment, the transport module 130 of the brick loading/unloading apparatus 100 is arranged at the position corresponding to the brick cutting apparatus 200, that is, in X-axis and Y-axis directions corresponding to the forward, backward, left, and right directions by the transport member 1. The arrangement of the transport module 130 in Z-axis, that is, up and down directions, is performed by the lift arm 120, and the alignment guide rest portion 131 of the transport module 130 is arranged on the alignment guide 210 of the brick cutting apparatus 200, with precise 6-degree of freedom in X, Y, Z, Rx, Ry, and Rz axis direction through the insertion of the ball caster 150 into the alignment groove 214. Rx, Ry, and Rz may refer to a rotational axis along the axis X, Y, Z, respectively. Thus, the precise insertion position of the brick B may be determined based on the brick cutting apparatus 200, and accordingly, the brick B may be inserted into the brick cutting apparatus 200 while being precisely aligned.

The brick insert portion 220 is arranged in the insertion space S of the brick cutting apparatus 200 and may receive the brick B transferred by the brick loading/unloading apparatus 100. Here, the alignment guide 210 may be attached at the position corresponding to the brick insert portion 220. When finishing the alignment of the transport module 130, the brick insert portion 220 may be arranged in the region corresponding to a brick transport portion 170, and may receive the brick B transferred through the brick transport portion 170.

Here, because the transport module 130 is aligned based on the alignment guide 210 and the brick B loaded on the transport module 130 has to be inserted into the brick insert portion 220 from the position corresponding to the brick insert portion 220, the alignment guide 210 needs to be installed on the outer surface portion of the brick cutting apparatus 200 at the position corresponding to the brick insert portion 220. In other words, the brick B loaded on the transport module 130 is aligned with the brick insert portion 220. According to the non-limiting embodiment, the alignment guide 210 is attached to the outer surface portion of the brick cutting apparatus 200 by using a jig connected to the brick insert portion 220, and thus, the alignment guide 210 may be arranged on the brick cutting apparatus 200 to correspond to the position of the brick insert portion 220.

Referring to for example FIGS. 3 and 11, the transport module 130 according to this non-limiting embodiment may include the brick transport portion 170 attached to the lower portion thereof. The brick transport portion 170 may slide on the lower portion of the transport module 130. In other words, the brick transport portion 170 may move within the lower third of the transport module. Said movement may be in the longitudinal direction of the transport module. The brick transport portion 170 may grip the brick B, and then, the brick transport portion 170 may be moved while gripping the upper end portion of the brick B and insert the brick B into the brick cutting apparatus 200. For example, the brick transport portion 170 may load the brick B into the brick insert portion 220 arranged inside the brick cutting apparatus 200. On the contrary, the brick transport portion 170 may unload the brick from the brick insert portion 220 and bring the brick to the transport module 130. The brick transport portion 170 and the brick insert portion 220 may load and unload the brick in the forward/backward (back-and-forth) directions while gripping the bar 10 at the upper end portion of the brick B, as shown in FIG. 1. The brick transport portion 170 according to this embodiment may adopt various brick transport structures, e.g., vacuum means, e.g. one or more air holes and/or channels, for sucking the brick, or mechanical means like a grip portion for gripping the brick or an interlocking portion for interlocking with the brick, and/or electromechanical means like magnets or coils, etc., rather than the gripping structure of the brick.

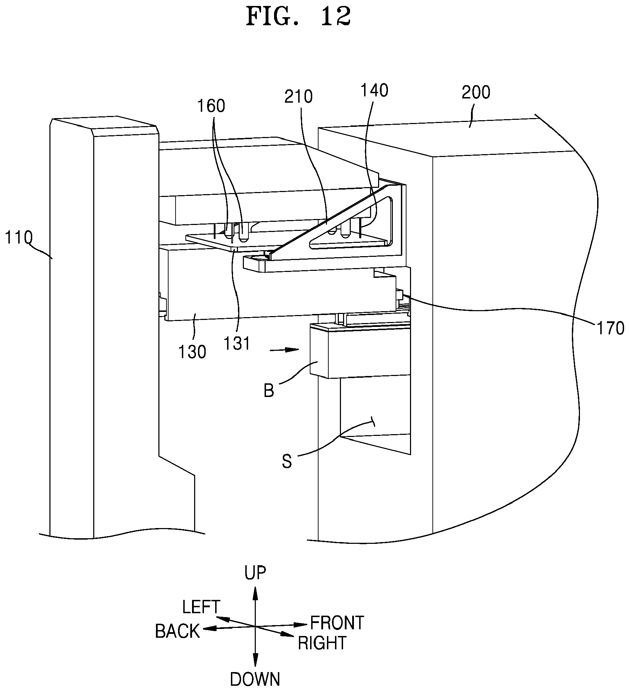

FIG. 12 is a diagram showing that a brick is inserted in an insertion space S of a brick cutting apparatus 200 after finishing the seating of a transport module 130, according to another non-limiting embodiment of the present disclosure. The previous explanations apply for this embodiment accordingly.

Referring to FIG. 12, the lift arm 120 may further include a pressing member 160. The lift arm 120 may move the pressing member 160 to protrude downward from the lift arm 120.

Here, the lower end portion of the pressing member 160 may press the upper side portion of the transport module 130 that is aligned and seated on the alignment guide 210, and the transport module 130 may be coupled in close contact with the first and second guide portions 212 and 213 of the alignment guide 210. Accordingly, the transport module 130 may be arranged at a set position on the alignment guide 210. By the pressure on the upper portion of the transport module 130, the transport module 130 is forced onto the guide portions 212, 213, thereby forcing the alignment of the transport module with the guide portions 212, 213. In other words, the pressure acts in parallel to gravity and, thereby, strengthens the centering effect. Alternatively, the design limitations of the alignment groove 214 are broadened by the additional pressure. That is, a shallower inclination angle (a) may be used, compared to the angle as mentioned above. Therefore, the inclination angle may be 35-degree or, preferably, even 25-degree, allowing for example for an even wider width W of the alignment groove 214.

Also, the ball caster 150 may be moved to the center of the alignment groove 214 due to the gravity after being inserted into the alignment groove 214, but the ball caster 150 may not be completely located at the center of the alignment groove 214 due to the frictional force and external force applied between the inclined surface 214' of the alignment groove 214 and the ball caster 150. Therefore, according to this non-limiting embodiment, the pressing member 160 may press the upper portion of the alignment guide rest portion 131 of the transport module 130 such that the alignment guide rest portion 131 may press the ball caster 150 in the direction toward the alignment groove 214. Thus, the ball caster 150 may be precisely located at the center of the alignment groove 214 along the inclined surface of the alignment groove 214. Thereby, the precision in the alignment between the transport module 130 and the alignment guide 210 may be improved.

The pressing member 160 may be formed of, for example, a solid and rigid material, and thus, may expect an effect of improving the pressing force due to the rigidity. Alternatively, the pressing member 160 may be formed of an elastic material such as a spring, and thus, a damping effect of the impact applied to the alignment guide rest portion 131 that is pressed may be obtained.

Hereinafter, the brick loading/unloading method according to a non-limiting embodiment of the present disclosure is described below with reference to FIGS. 2 to 8, 12, and 13.

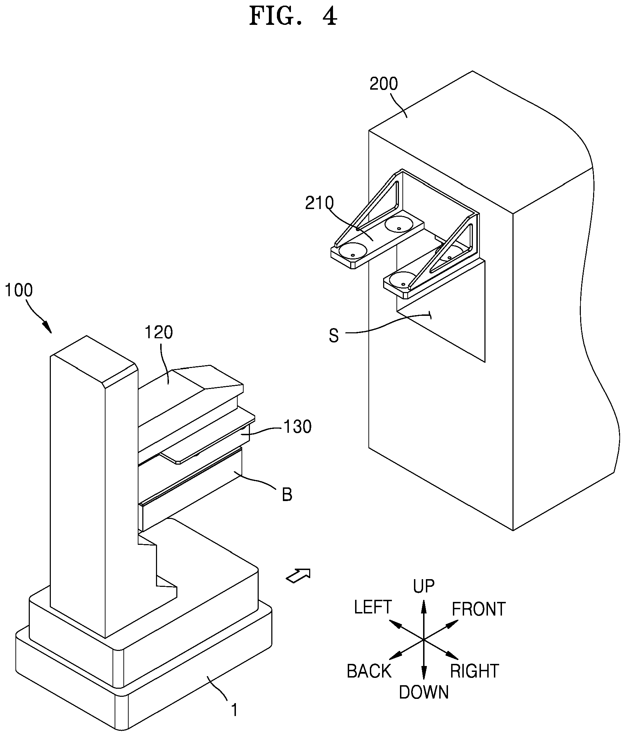

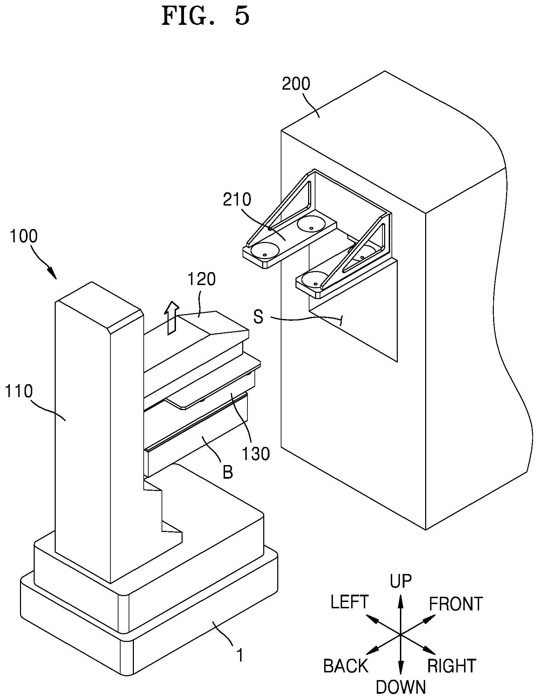

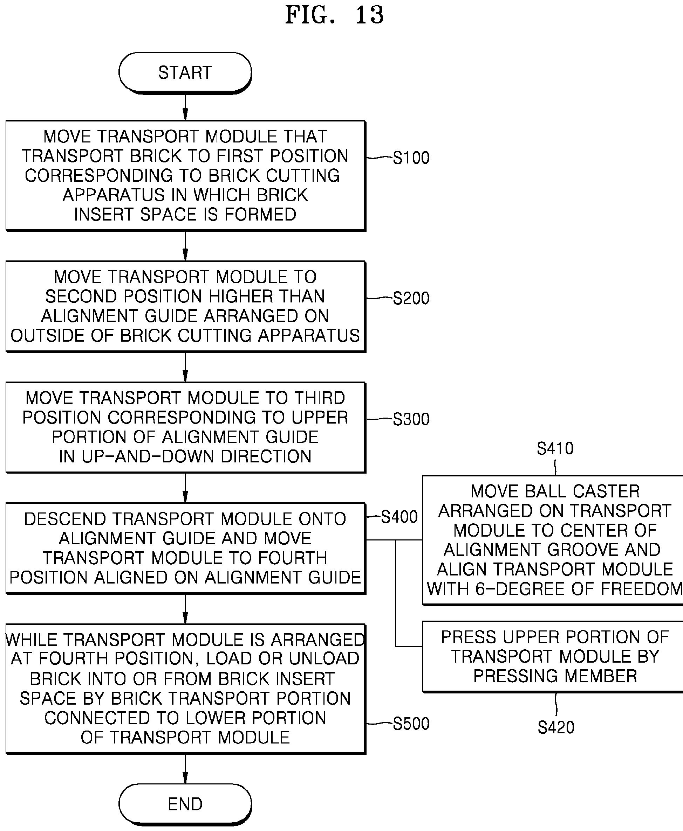

FIG. 2 is a perspective view of a transport member, a brick loading/unloading apparatus, and a brick cutting apparatus according to an embodiment of the present disclosure. FIG. 3 is an exploded perspective view of a brick loading/unloading apparatus according to an embodiment of the present disclosure. FIG. 4 is a diagram showing that a transport member transports a transport module of a brick loading/unloading apparatus to a first position corresponding to a brick cutting apparatus, according to an embodiment of the present disclosure. FIG. 5 is a diagram showing that a lift arm transports a transport module to a second position that is higher than an alignment guide, according to an embodiment of the present disclosure. FIG. 6 is a diagram showing that a transport member transports a transport module of a brick loading/unloading apparatus from an upper portion of an alignment guide to a third position corresponding to the alignment guide, according to an embodiment of the present disclosure. FIG. 7 is a diagram showing that a lift arm descends a transport module and the transport module is seated and aligned on an alignment guide, according to an embodiment of the present disclosure. FIG. 8 is a diagram showing that a transport module is seated and aligned on the alignment guide of FIG. 7. FIG. 12 is a diagram showing that a brick is inserted in an insertion space of a brick cutting apparatus after finishing the seating of a transport module, according to an embodiment of the present disclosure. FIG. 13 is a flowchart illustrating a brick loading/unloading method according to an embodiment of the present disclosure.

The brick loading/unloading method according to this non-limiting embodiment includes an operation (S100) in which the transport member 1 moves to the position corresponding to the brick cutting apparatus 200 with the brick loading/unloading apparatus 100 loaded thereon, and the transport module 130 attached on the brick loading/unloading apparatus 100 is moved to a first position corresponding to the brick cutting apparatus 200 (see FIG. 4). That is, in the operation S100, the transport module 130 transporting the brick B is moved to the first position corresponding to the brick cutting apparatus 200 in which the brick insertion space S is formed. In other words, the brick loading/unloading apparatus 100 is aligned with the brick cutting apparatus 200 in at least one direction.

Also, the method includes an operation (S200), in which the transport member 1 is stopped at the first position, and the brick loading/unloading apparatus 100 moves the transport module 130 upward by using the lift arm 120, and the transport module 130 is moved to a second position that is higher than the alignment guide 210 (see FIG. 5). That is, in the operation S200, the transport module 130 is moved to the second position that is higher than the alignment guide 210 that is arranged on the outer side of the brick cutting apparatus 200. In other words, the brick loading/unloading apparatus 100 is aligned with the brick cutting apparatus 200 in at least two directions.

Also, the method includes an operation (S300) in which the transport member 1 moves the transport module 130 of the brick loading/unloading apparatus 100 and the transport module 130 is moved from the upper portion of the alignment guide 210 to a third position corresponding to the alignment guide 210 (see FIG. 6). That is, in the operation S300, the transport module 130 is moved to the third position corresponding to the upper portion of the alignment guide 210 in the up and down direction. In other words, the brick loading/unloading apparatus 100 is aligned with the brick cutting apparatus 200 in three directions.

Optionally, the order of operations S100, S200 and S300 may be swapped, as long as the transport module 130 and the alignment guide 210 are positioned as mentioned regarding said third position, which is required for executing the following operation S400.

Also, the method includes an operation (S400) in which the lift arm 120 descends the transport module 130 via the wires 140 and the transport module 130 is seated on the alignment guide 210 while being aligned with 6-degree of freedom to be moved to a fourth position (see FIGS. 7 and 8). That is, in the operation S400, the transport module 130 is descended onto the alignment guide 210 and is moved to the fourth position where the transport module 130 is aligned on the alignment guide 210.

Also, the method includes an operation (S500) in which, while the transport module 130 is arranged at the fourth position, the brick transport portion 170 connected to the lower portion of the transport module 130 transports the gripped brick B into the brick cutting apparatus 200 (see FIG. 12).

Thus, according to the embodiment, the processes, in which the transport module 130 of the brick loading/unloading apparatus 100 is moved to the first position corresponding to the brick cutting apparatus 200 by the transport member 1, the transport module 130 is moved to the second position that is higher than the alignment guide 210 by the lift arm 120, the transport module 130 is moved to the third position corresponding to the alignment guide 210 by the transport member 1, and the transport module 130 that is descending by the lift arm 120 is moved to the fourth position, where the alignment with 6-degree of freedom is performed, through the process of inserting and aligning the ball caster 150 in the alignment groove 214, may be sequentially performed. That is, according to this non-limiting embodiment, even when the transport module 130 is located slantly because the transport member 1 is not aligned in at least one of the left, right, forward, and/or backward directions as shown in, for example, FIG. 9A, the position of the transport module 130 may be precisely adjusted based on the brick cutting apparatus 200. In other words, due to the interaction between the transport module 130 and the alignment guide 210 of the brick cutting apparatus 200 said non-alignment may be corrected. Thus, the brick B located on the transport module 130 may be transported into the brick cutting apparatus 200 without an error and the precision in the transportation may be greatly improved.

Also, according to a non-limiting embodiment, the process in which the transport module is moved to the fourth position may include an operation (S410), in which the ball caster 150 attached to the transport module 130 is inserted in the alignment groove 214 that is recessed in the alignment guide 210, and the transport module 130 is aligned with 6-degree of freedom while the ball caster 150 is moved to the center of the alignment groove 214.

Also, according to a non-limiting embodiment, the lift arm 120 includes the pressing member 160, and after the process in which the transport module 130 is moved to the fourth position, an operation (S420) in which the pressing member 160 presses the transport module 130 so that the transport module 130 is coupled in close contact with the alignment guide 210 may be further performed.

The present disclosure is described above with reference to the embodiments shown in the drawings, but these embodiments are merely examples. One of ordinary skill in the art would understand that various modifications and other equivalent embodiments may be made from the embodiments. Therefore, the scope sought to be protected of the disclosure shall be defined by the appended claims.

The particular implementations shown and described herein are illustrative examples of the embodiments and are not intended to otherwise limit the scope of the embodiments in any way. In order to simply and clearly describe the disclosure, the description of the general technology and structure according to the related art may be omitted. Furthermore, the connecting lines or connectors shown in the drawings are intended to represent example functional relationships and/or physical or logical couplings between the various elements. It should be noted that many alternative or additional functional relationships, physical connections, or logical connections may be present in a practical device. Moreover, no item or component is essential to the practice of the disclosure unless the element is specifically described as "essential" or "critical".

Throughout the specification, in particular, in claims, "the" or other similar referring expressions may refer to both a singular form and a plural form. Unless otherwise defined, the ranges defined herein are intended to include values within the range as individually applied and may be considered to be the same as individual values constituting the range in the detailed description. Also, operations constituting methods may be performed in appropriate order unless explicitly described in terms of order or described to the contrary. Exemplary embodiments are not necessarily limited to the order of operations given in the description. The examples or exemplary terms (for example, etc.) used herein are to merely describe exemplary embodiments in detail and are not intended to limit the embodiments unless defined by the following claims. Also, those of ordinary skill in the art will readily appreciate that many alternations, combinations and modifications, may be made according to design conditions and factors within the scope of the appended claims and their equivalents.

The brick loading/unloading apparatus according to one or more embodiments may adjust the warpage in every direction (X, Y, Z, Rx, Ry, and Rz) with 6-degree of freedom through the structure in which the transport module is aligned and seated on the alignment guide, and may adjust the warpage in every direction with the 6-degree of freedom only with the structure of seating the transport module.

The brick loading/unloading apparatus according to one or more embodiments may reduce modification of an existing brick cutting apparatus for brick insertion, because the alignment guide may be only attached to the outer surface of the brick cutting apparatus.

The brick loading/unloading apparatus according to one or more embodiments does not need to additionally install an apparatus for aligning and inserting the brick, e.g., a gantry robot, etc., for every brick cutting apparatus, and the transport member moves around to load/unload the brick to/from the brick cutting apparatuses. Thus, convenience in the processes may be achieved through the automation of the brick insertion.

The effects of the present disclosure are not limited to the aforementioned effects, and other effects of the present disclosure may be understood by the following description and will become apparent from the embodiments of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

## Claims

1. A brick loading/unloading apparatus (100) comprising:
a main body (110);
a transport module (130) transporting a brick (B) to a brick cutting apparatus (200) in which a brick insertion space (S) is formed;
a lift arm (120) coupled to an upper end portion of the main body (110) to move the transport module (130) up/down; and
a plurality of wires (140) connecting the transport module (130) to the lift arm (120),
wherein the transport module (130) includes an alignment guide rest portion (131) connected to the plurality of wires (140),
the brick cutting apparatus (200) includes an alignment guide (210) that corresponds to the alignment guide rest portion (131) in an up-and-down direction and is arranged on an outer side thereof, and
when the lift arm (120) descends the transport module (130) by extending the wires (140), the transport module (130) is aligned and seated on the alignment guide (210).

2. The brick loading/unloading apparatus (100) of claim 1, further comprising:
a body portion (211) coupled to an upper end portion of the brick insertion space (S) in the brick cutting apparatus (200); and
first and second guide portions (212, 213) that respectively extend from opposite sides of the body portion (211) toward an outer portion of the brick cutting apparatus (200),
wherein the alignment guide rest portion (131) is formed in a plate shape and is seated and aligned on upper portions of the first and second guide portions (212, 213).

3. The brick loading/unloading apparatus (100) of claim 1 or 2, wherein an alignment groove (214, 214a, 214b, 214c, 214d) is recessed in an upper surface of each of the first and second guide portions (212, 213),
wherein the alignment groove (214, 214a, 214b, 214c, 214d) has an inclined surface (214').

4. The brick loading/unloading apparatus (100) of any of claims 1 to 3, wherein a ball caster (150, 150a, 150b, 150c, 150d) is arranged on a lower surface of the alignment guide rest portion (131), and
the ball caster (150, 150a, 150b, 150c, 150d) is arranged on a region corresponding to the alignment groove (214, 214a, 214b, 214c, 214d),
wherein, when the transport module (130) is descended, the ball caster (150, 150a, 150b, 150c, 150d) is moved to a center of the alignment groove (214, 214a, 214b, 214c, 214d) along the inclined surface (214') and the transport module (130) is aligned with 6-degree of freedom.

5. The brick loading/unloading apparatus (100) of any of claims 1 to 4, wherein the alignment groove (214, 214a, 214b, 214c, 214d) has a width that is greater than a diameter of the ball caster (150, 150a, 150b, 150c, 150d).

6. The brick loading/unloading apparatus (100) of any of claims 1 to 5, wherein an inclination angle of the inclined surface (214') is 60 degrees of less.

7. The brick loading/unloading apparatus (100) of any of claims 1 to 6, wherein the transport module (130) includes a brick transport portion (170) arranged at a lower portion thereof, and
the brick transport portion (170) is moved while gripping an upper end portion of the brick to insert the brick into the brick cutting apparatus (200).

8. The brick loading/unloading apparatus (100) of any of claims 1 to 7, wherein a brick insert portion (220) receiving the brick transported by the brick loading/unloading apparatus (100) is formed in the brick insertion space (S) of the brick cutting apparatus (200), and
wherein, when the alignment of the transport module (130) on the alignment guide (210) is completed, the brick insert portion (220) is arranged in a region corresponding to the brick transport portion (170).

9. The brick loading/unloading apparatus (100) of any of claims 1 to 8, further comprising a pressing member (160) provided to allow the transport module (130) to protrude upward from a lower side of the lift arm (120),
wherein the pressing member (160) presses an upper surface of the alignment guide rest portion (131) so that the transport module (130) comes into close contact with the first and second guide portions (212, 213) of the alignment guide (210).

10. The brick loading/unloading apparatus (100) of any of claims 1 to 9, wherein the pressing member (160) is formed of an elastic member.

11. The brick loading/unloading apparatus (100) of any of claims 1 to 10, further comprising a transport member (1) arranged on the lower side of the main body (110) and controlling the position of the brick loading/unloading apparatus (100).

12. The brick loading/unloading apparatus (100) of any of claims 1 to 11, wherein the transport member (1) transports the brick loading/unloading apparatus (100) to a position corresponding to the brick cutting apparatus (200).

13. A brick loading/unloading method comprising:
moving a transport module (130) that transports a brick, to a first position (S100) corresponding to a brick cutting apparatus (200), in which a brick insertion space (S) is formed;
moving the transport module (130) to a second position (S200) that is higher than an alignment guide (210) that is arranged on an outer side of the brick cutting apparatus (200);
moving the transport module (130) to a third position (S300) that corresponds to an upper portion of the alignment guide (210) in an up-and-down direction;
descending (S400) the transport module (130) onto the alignment guide (210) and moving the transport module (130) to a fourth position aligned on the alignment guide (210); and
while the transport module (130) is arranged at the fourth position, loading/unloading the brick (S500), by a brick transport portion (170) corresponding to a lower side of the transport module (130), to/from the brick insertion space (S).

14. The brick loading/unloading method of claim 13, wherein the alignment guide (210) includes first and second guide portions (212, 213) respectively extending to an outer portion of the brick cutting apparatus (200),
an alignment groove (214, 214a, 214b, 214c, 214d) is recessed in an upper surface of each of the first and second guide portions (212, 213), and
the moving (S410) of the transport module (130) to the fourth position comprises moving a ball caster (150, 150a, 150b, 150c, 150d) arranged on the transport module (130) to a center of the alignment groove (214, 214a, 214b, 214c, 214d) so that the transport module (130) is aligned with 6-degree of freedom.

15. The brick loading/unloading method of claim 13 or 14, wherein the moving of the transport module (130) to the fourth position further comprises pressing (S420), by a pressing member (160), an upper portion of the transport module (130).
